# EUROPEAN PATENT SPECIFICATION

(11) **EP 2 800 800 B1**
(45) Date of publication and mention of the grant of the patent: **09.09.2020**
(21) Application number: 13700182.2
(22) Date of filing: 04.01.2013
(51) Int. Cl.: C10L 1/00

(54) **TRACERS AND METHOD OF MARKING LIQUIDS**
TRACER UND VERFAHREN ZUR MARKIERUNG VON FLÜSSIGKEITEN
TRACEURS ET PROCÉDÉ DE MARQUAGE DE LIQUIDES

(30) Priority: 06.01.2012 GB 201200184
(43) Date of publication of application: 12.11.2014
(73) Proprietor: Johnson Matthey Public Limited Company, London EC4A 4AB (GB)
(72) Inventor: CROUD, Vincent Brian, Sheffield South Yorkshire S36 6BN (GB); EDWORTHY, Ian Stuart, Gateshead Tyne&Wear NE9 7RD (GB); McCALLIEN, Duncan, Darlington Durham DL3 8NE (GB)
(74) Representative: Atkinson, Ian Anthony
(86) International application number: PCT/GB2013/050011
(87) International publication number: WO 2013/102766

(56) References cited:
- EP-A2- 1 329 493
- WO-A2-03/022848
- US-A- 4 666 455
- US-B1- 6 312 958
- POTRAWA T ET AL: "FLUORESZENZFARBSTOFFE MIT GROSSEN STOKES-SHIFTS - IOESLICHE DIHYDROPYRROLOPYRROLDIONE", CHEMISCHE BERICHTE, VERLAG CHEMIE GMBH. WEINHEIM, DE, vol. 120, 1 January 1987 (1987-01-01), pages 1075-1078, XP000885623, ISSN: 0009-2940
- MARTIN VALA ET AL: "Comparative Studies of Diphenyl-Diketo-Pyrrolopyrrole Derivatives for Electroluminescence Applications", JOURNAL OF FLUORESCENCE, KLUWER ACADEMIC PUBLISHERS-PLENUM PUBLISHERS, NE, vol. 18, no. 6, 22 May 2008 (2008-05-22), pages 1181-1186, XP019645137, ISSN: 1573-4994, DOI: 10.1007/S10895-008-0370-X
- RIGGS R L ET AL: "Synthetic studies related to diketopyrrolopyrrole (DPP) pigments. Part 3: Syntheses of tri- and tetra-aryl DPPs", TETRAHEDRON, ELSEVIER SCIENCE PUBLISHERS, AMSTERDAM, NL, vol. 61, no. 47, 21 November 2005 (2005-11-21), pages 11230-11243, XP027861427, ISSN: 0040-4020 [retrieved on 2005-11-21]

## Description

The present invention concerns marking liquids, especially hydrocarbon liquids, with tracer materials. The present invention in particular concerns marking hydrocarbons which are taxable or liable to be subject to tampering or substitution, such as gasoline and diesel fuels for example.

It is well-known to add tracers to hydrocarbon liquids. A typical application is the tagging of hydrocarbon fuels in order to identify the fuel at a subsequent point in the supply chain. This may be done for operational reasons, e.g. to assist in distinguishing one grade of fuel from another, or for other reasons, in particular to ensure fuel quality, deter and detect adulteration and to provide a means to check that the correct tax has been paid. Apart from fuels, other products, such as vegetable oils may be marked to identify the product produced at a particular source, or certified to a particular standard.

Potrawa T et al: "Fluoreszenzfarbstoffe Mit Grossen Stokes-Shifts - lösliche Dihydropyrrolopyrroldione", Chemische Berichte, vol. 120, (1987), pages 1075-1078, discusses the use of certain dihydropyrrolopyrroldione compounds as laser dyes. Martin Vala et al: "Comparative Studies of Diphenyl-Diketo-Pyrrolopyrrole Derivatives for Electroluminescence Applications", Journal of Fluorescence, vol. 18, no. 6, (2008), pages 1181-1186 is a comparative study of four diphenyl diketopyrrolopyrroles derivatives for electroluminescence applications. Riggs R L et al: "Synthetic studies related to diketopyrrolopyrrole (DPP) pigments. Part 3: Syntheses of tri- and tetra-aryl DPPs", Tetrahedron, vol. 61, no. 47, (2005), pages 11230- 11243, describes synthetic studies related to diketopyrrolopyrroles (DPP) pigments.

US 4,666,455 describes N-substituted 1,4-diketopyrrolo-[3,4-c]-pyrrole compounds which are suitable for dyeing high molecular weight organic material, in particular polymers such as polyethyleneterephthalate. US 6,312,958 relates to a method of marking liquids using at least two markers, wherein said markers absorb in the 600-1200 nm region of the spectrum and reemit fluorescent light and the absorption range of at least one marker overlaps with the absorption range of at least one other marker. Preferred such markers are compounds selected from the group consisting of metal-free and metal-containing phthalocyanines, metal-free and metal-containing naphthalocyanines, nickel-dithiolene complexes, aminium compounds of aromatic amines, methine dyes, squaric acid dyes and croconic acid dyes. EP1329493 discloses electroluminescent devices comprising diketopyrrolopyrroles (DDPs). It

is also disclosed that certain DDPs can be used for the preparation of fluorescent tracers for e.g. leak detection of fluids such as lubricants, cooling systems, and water.

WO2010/039152 discloses a method of marking fuels with tracers that are difficult to remove from the fuel composition.

One problem which is known to exist with the marking of fuel liquids in particular, is the potential for the tracer to be removed, by evaporation from the fuel, by degradation of the tracer through ageing or exposure to environmental conditions such as heat, sunlight or air or alternatively by deliberate removal of the tracer for unlawful purposes such as for avoidance of tax. Methods for deliberate removal of tracers include adsorption of the tracer onto common adsorbent materials such as charcoal or clays, exposure to radiation, such as ultraviolet light, oxidation etc. A useful fuel tracer therefore needs to be resistant to removal by these common methods and also to more sophisticated treatments such as treatment with acids and/or bases. It is an object of the invention to provide a method of marking hydrocarbon liquids which is more resistant to removal of the tracer than known methods.

In addition to being difficult to remove from the intended medium, tracer molecules should ideally possess a property which is different from that of the medium and which allows for their ready identification. Molecules exhibiting a characteristic fluorescent response that is at a different wavelength from that of the bulk medium are particularly suited for use as tracer molecules. Fluorescence is a useful property for the tracer molecule to possess as not only can it can be detected with hand-portable instrumentation but it usually can also detect the presence of fluorescent compounds at concentrations of parts per million, or less.

According to the invention we provide a method of marking a hydrocarbon liquid selected from a diesel or gasoline fuel. The method is defined in claim 1 and comprises the step of adding to said liquid, as a tracer compound, a compound of Formula I: 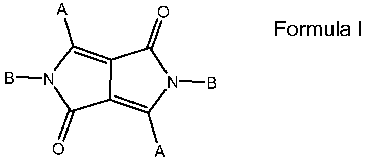 wherein,
each A is independently selected from the group consisting of (i) a phenyl group, (ii) a phenyl group substituted with one or more halogen atoms, an aliphatic group or a halogenated aliphatic group, (iii) a partially or fully halogenated alkyl group or (iv) a linear branched or cyclic C₁ - C₂₀ alkyl group,
and each B is independently selected from the group consisting of a
   (i) phenyl,
   (ii) an unsubstituted phenylmethyl group,
   (iii) a substituted phenyl group in which the benzene ring is substituted by at least one of the substituents selected from the group consisting of a fluorine atom, a partially or fully halogenated alkyl group and a linear, branched or cyclic C₁ - C₂₀ alkyl group,
   (iv) a substituted phenylmethyl group in which the benzene ring is substituted by at least one of the substituents selected from the group consisting of a fluorine atom, a partially or fully halogenated alkyl group and a linear, branched or cyclic C₁ - C₂₀ alkyl group, or
   (v) 1,1-dimethylpropyl, 1,1-dimethylbutyl, 1-ethyl-1-methylpropyl, 2,2-dimethylbutyl, 1,1,2-trimethylpropyl, 1,2,2-trimethylpropyl, 1-ethyl-2,2-dimethylpropyl, 1-methylethyl-2,2-dimethylpropyl, 2-methylcyclohexyl, 3-methylcyclohexyl, 4-methylcyclohexyl, cyclohexylmethyl, 1-adamantyl, 2-adamantyl and decahydronaphthyl groups;
wherein said tracer compound is added to said hydrocarbon liquid at a concentration within the range from 1 microgram per litre to 1000 micrograms per litre.

The invention is for marking liquid hydrocarbon fuels, specificallygasoline and diesel fuels. In one particular application a low-tax fuel such as an agricultural diesel may be marked in order to detect any subsequent sale and use for purposes such as road-vehicle fuel which would normally be taxed more highly. In such cases unlawful dilution or substitution of a more highly taxed fuel with the low-taxed fuel may be detected by analysis of the highly taxed fuel to determine whether the tracer is present. Therefore in these cases, it is highly beneficial to use a tracer compound in the low-taxed fuel which is not easily removed, or laundered, from the fuel to a level at which it can no longer be detected. We have found that compounds of Formula I are resistant to removal from hydrocarbon fuels by several known methods of fuel laundering.

Preferably, when any of A or B contains a halogen or halogenated alkyl, the halogen atom is fluorine and the halogenated alkyl group is a fluoroalkyl group. The halogenated alkyl group(s) may be partially or fully halogenated, linear or branched, acyclic or cyclic aliphatic groups. Preferred halogenated alkyl groups include trifluoromethyl, 1,1-difluoroethyl, fluoroallyl, heptafluoropropyl, tridecafluorohexyl, heptadecafluorooctyl. When A or B contains a halogen-substituted benzene ring, it is preferred that the ring is substituted with at least three, preferably at least four, especially five halogen atoms.

In Formula I, alkyl group substituents may be straight chain or branched acyclic or cyclic aliphatic groups, preferably consisting of 4-12 carbon atoms. Branched or cyclic aliphatic groups are preferred. Particularly preferred are substituents which include at least one quaternary substituted carbon atom, such as tertiary butyl. Preferred groups include tert-butyl, 1,1-dimethylpropyl, 2,2-dimethylpropyl (neo-pentyl), 1,1-dimethylbutyl, 1-ethyl-1-methylpropyl, 2,2-dimethylbutyl, 1,1,2-trimethylpropyl, 1,2,2-trimethylpropyl, 1-ethyl-2,2-dimethylpropyl, 1-methylethyl-2,2-dimethylpropyl, 1,1,3,3-tetramethylbutyl, cyclopentyl, cyclohexyl, 2-methylcyclohexyl, 3-methylcyclohexyl, 4-methylcyclohexyl, cyclohexylmethyl, 2-ethylhexyl, 1-adamantyl, 2-adamantyl and decahydronaphthyl groups.

Each A is independently selected from the group consisting of (i) a phenyl group, (ii) a phenyl group substituted with one or more halogen atoms, an aliphatic group or a halogenated aliphatic group, (iii) a partially or fully halogenated alkyl group or (iv) a linear branched or cyclic C₁ - C₂₀ alkyl group. A is most preferably selected from a phenyl group, optionally substituted with at least one halogen, alkyl group and/or a halogenated alkyl group. For example A may be selected from phenyl, perfluorophenyl (pentafluorophenyl), bis(trifluoromethyl)phenyl or bis(t-butyl)phenyl. In preferred embodiments, each of the two A groups in the tracer compound has an identical composition.

Preferably each B is independently selected from the group consisting of (i) a phenylmethyl group, (ii) a substituted phenyl group in which the benzene ring is substituted by at least one of the substituents selected from the group consisting of a fluorine atom, a partially- or fully-halogenated alkyl group and a linear, branched or cyclic C₁ - C₂₀ alkyl group (iii) a substituted phenylmethyl group in which the benzene ring is substituted by at least one of the substituents selected from the group consisting of a fluorine atom, a partially or fully halogenated alkyl group and a linear, branched or cyclic C₁ - C₂₀ alkyl group or (iv) a cyclic C₁ - C₂₀ alkyl group.B is most preferably a cyclohexylmethyl group, a perfluorophenyl group, a phenylmethyl group or a substituted phenylmethyl group in which the benzene ring is substituted with at least one C₁ - C₆ alkyl group, a fluorine atom or a halogenated alkyl group, especially a trifluoromethyl group. In preferred embodiments, each of the two B groups in the tracer compound has an identical composition.

In a further preferred embodiment, each of the two A groups in the tracer compound has an identical composition to each other and each of the two B groups in the tracer compound has an identical composition to each other. Usually, but not necessarily, the A groups are of a different composition from that of the B groups.

The tracer compounds are derivatives of 3,6-diphenyl-2,5-dihydropyrrolo[3,4-c]pyrrole-1,4-dione, known as C.I. Pigment Red 255. In Formula 1, substituent A is at the 3 and 6 positions; substituent(s) B are at the 2 and 5 positions.

Preferred compounds include:
(a) 3,6-diphenyl-2,5-di([pentafluorophenyl]methyl)pyrrolo[3,4-c]pyrrole-1,4-dione
(b) 3,6-diphenyl-2,5-di([3,5-bistrifluoromethylphenyl]methyl)pyrrolo[3,4-c]pyrrole-1,4-dione
(c) 3,6-diphenyl-2,5-di([3,5-bis(t-butyl)-phenyl]methyl)pyrrolo[3,4-c]pyrrole-1,4-dione
(d) 3,6-di(3,5-bistrifluoromethylphenyl)-2,5-di(cyclohexylmethyl)pyrrolo[3,4-c]pyrrole-1,4-dione.

The tracer compound is added to the hydrocarbon liquid in such an amount as to provide a concentration of the tracer compound which is detectable by readily available laboratory methods capable of identifying the tracer compound in the liquid at the concentrations used. Suitable methods include, but are not limited to, (i) gas chromatography coupled with a suitable detector such as an electron capture detector or a mass spectrometer, (ii) fluorescence spectroscopy. Typical concentrations are within the range 1 µg/l to 1000 µg/l, the actual amount used depending on the detection method and limit of detection of the particular tracer compound used. The tracer compound may be present at a higher concentration than 1000 µg/l although when the product to be marked is a high-volume commodity such as a motor-fuel, economic considerations usually favour lower levels of tracer compound. The tracer compound may be supplied in the form of a concentrated dosing solution (or master-batch) of the tracer compound in a solvent. In this case the preferred solvent is a liquid which is similar to the liquid to be marked, although a different solvent, e.g. a hexane or mixed paraffins solvent may be used provided the presence of such a solvent can be tolerated in the hydrocarbon liquid to be marked. The tracer compound may be added to the hydrocarbon liquid in the form of a concentrated dosing solution of the tracer compound in a solvent. The concentrated dosing solution can be added to the hydrocarbon liquid to be marked so as to produce the required final concentration of the tracer compound by dilution. More than one tracer compound may be added to the liquid. The hydrocarbon liquid may contain more than one tracer compound.

The selected tracer compound(s) is resistant to laundering by adsorption on activated charcoal or clay. In a preferred embodiment, at least 10%, more preferably at least 20% of the tracer compound is retained in the hydrocarbon liquid after a 10 ml sample of the liquid containing the tracer compound has been shaken for 2 minutes with 0.5g fresh activated charcoal. The test to be applied for resistance to laundering by adsorption on a solid adsorbent is described below.

Preferably at least 50% (more preferably at least 60%, especially at least 80%) of the tracer compound is retained in the hydrocarbon liquid after a 10 ml sample of the liquid containing the tracer compound has been shaken for 2 minutes with 0.5g of fresh sepiolitic clay.

Preferably the selected tracer compound(s) is resistant to laundering by chemical treatment with an acid or a base. In preferred embodiments, at least 50% (more preferably at least 75%) of the tracer compound is retained in the hydrocarbon liquid after a sample of the liquid containing 1 mg/l of the tracer compound has been vigorously agitated in contact with an equal volume of 5% aqueous hydrochloric acid. More preferably, at least 50% (more preferably at least 75%) of the tracer compound is retained in the hydrocarbon liquid after a sample of the liquid containing 1mg/l of the tracer compound has been vigorously agitated in contact with an equal volume of concentrated (36%) hydrochloric acid.

Preferably at least 50% (more preferably at least 75%) of the tracer compound is retained in the hydrocarbon liquid after a sample of the liquid containing 1 mg/l of the tracer compound has been vigorously agitated in contact with an equal volume of 5% aqueous sulphuric acid. More preferably, at least 50% of the tracer compound is retained in the hydrocarbon liquid after a sample of the liquid containing 1mg/l of the tracer compound has been vigorously agitated in contact with 5% of the sample volume of concentrated sulphuric acid.

Preferably at least 50% (more preferably at least 75%) of the tracer compound is retained in the hydrocarbon liquid after a sample of the liquid containing 1mg/l of the tracer compound has been vigorously agitated in contact with an equal volume of 5% aqueous nitric acid. More preferably, at least 50% (more preferably at least 70%) of the tracer compound is retained in the hydrocarbon liquid after a sample of the liquid containing 1mg/l of the tracer compound has been vigorously agitated in contact with 5% of the sample volume of concentrated nitric acid.

Preferably at least 50% (more preferably at least 75%) of the tracer compound is retained in the hydrocarbon liquid after a sample of the liquid containing 1 mg/l of the tracer compound has been vigorously agitated in contact with an equal volume of 2M aqueous NaOH.

Preferably at least 50% of the tracer compound is retained in the hydrocarbon liquid after a sample of the liquid containing from 50 to 1000 µg/l of the tracer compound has been vigorously agitated in contact with an equal volume of 10% aqueous NaOCI solution.

Preferably at least 10% of the tracer compound is retained in the hydrocarbon liquid after a 10 ml sample of the liquid containing from 50 to 1000 µg/l of the tracer compound has been shaken for 2 minutes with 0.5g of fresh activated charcoal.

Preferably at least 50% of the tracer compound is retained in the hydrocarbon liquid after a 10

ml sample of the liquid containing from 50 to 1000 µg/l of the tracer compound has been shaken for 2 minutes with 0.5g of fresh powdered sepiolitic clay.

Preferably at least 50% of the tracer compound is retained in the hydrocarbon liquid after a sample of the liquid containing from 50 to 1000 µg/l of the tracer compound has been vigorously agitated in contact with an equal volume of up to 5% aqueous HCI.

Preferably at least 50% of the tracer compound is retained in the hydrocarbon liquid after a sample of the liquid containing from 50 to 1000 µg/l of the tracer compound has been vigorously agitated in contact with an equal volume of up to 5% aqueous H₂SO₄.

Preferably at least 50% of the tracer compound is retained in the hydrocarbon liquid after a sample of the liquid containing from 50 to 1000 µg/l of the tracer compound has been vigorously agitated in contact with an equal volume of up to 5% aqueous HNO₃.

Preferably at least 50% of the tracer compound is retained in the hydrocarbon liquid after a sample of the liquid containing from 50 to 1000 µg/l of the tracer compound has been vigorously agitated in contact with 2 Molar aqueous sodium hydroxide solution.

### Examples

In the Examples, the test methods which were used are described below. The tests were undertaken to determine how much of the tracer compounds was removed from liquid fuels by contact with either a solid absorbent or a liquid chemical. The liquid fuels used were (i) a commercial UK 95 gasoline and (ii) a synthetic test fuel, made by mixing together 76% isooctane, 16% toluene, 5% t-butyl methylether and 3% ethanol (all vol/ vol).

### Detection of tracers in fuels by fluorescence spectrometry

Samples were analysed using a Jobin Yvon SPEX FluoroMax-3 fluorimeter. A small quantity of each sample (3 ml) was poured into a quartz glass cuvette and irradiated with excitation (Ex) light appropriate to the molecule under test. Excitation and emission slit widths of 2 nm were used. An emission (Em) acquisition spectrum was collected for each molecule and the fluorescent emission at the wavelength showing maximal emission was recorded.

The magnitude of the fluorescent emission of the tracer molecules is proportional to their concentration up to and slightly above 1 mg/ L for the molecules under test. This means that tracer concentration may be ascertained by reference to the fluorescent response of a known concentration of the tracer. In practice, the known tracer concentration is the starting concentration of tracer in the hydrocarbon under test. An initial fluorescence spectrum of the tracer is collected, the liquid is subjected to some form of tracer removal treatment and then the fluorescence spectrum of the tracer is re-measured. The ratio of the fluorescent emission after treatment to the emission before treatment is the same as the ratio of tracer concentration after treatment to that before treatment. The ratio of tracer after treatment to beforehand is simply denoted as percentage tracer remaining.

In some examples, the concentration of tracer after treatment is apparently more than before treatment. This is a result of the background fluorescence of the medium being altered by the tracer removal treatment. It may be difficult to compensate for this change in the background fluorescence, which in turn might lead to an apparent increase in tracer fluorescence, and by implication, tracer concentration.

The tracer compounds used were:

| | | | Fluorescence spectrometry cond itions | |
|---|---|---|---|---|
| | | | Ex (nm) | Em (nm) |
| (a) | 3,6-diphenyl-2,5-di([pentafluorophenyl]methyl) pyrrolo[3,4-c]pyrrole-1,4-dione | 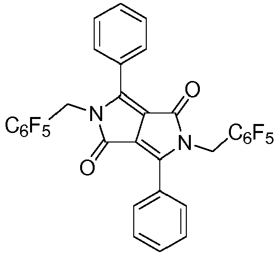 | in fuel ii | |
| | | | 470 | 510 |
| | | | in fuel i | |
| | | | 480 | 510 |
| (b) | 3,6-diphenyl-2,5-di([3,5-bistrifluoromethylphenyl]meth yl)pyrrolo[3,4-c]pyrrole-1,4-dione | 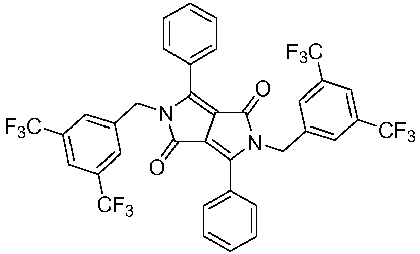 | in fuel ii | |
| | | | 470 | 515 |
| | | | in fuel i | |
| | | | 490 | 520 |
| (c) | 3,6-diphenyl-2,5-di([3,5-bis(t-butyl)-phenyl]methyl)pyrrolo[3,4-c]pyrrole-1,4-dione | 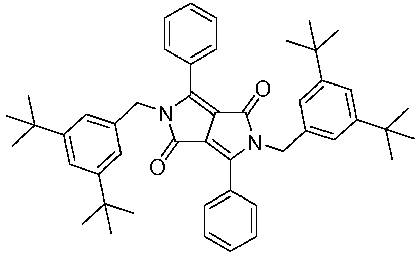 | in fuel ii | |
| | | | 470 | 520 |
| | | | in fuel i | |
| | | | 490 | 520 |
| (d) | 3,6-di(3,5-bistrifluoromethylphenyl)-2,5-di(cyclohexylmethyl)pyrrolo[3, 4-c]pyrrole-1,4-dione | 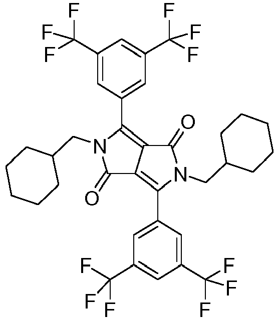 | in fuel ii | |
| | | | 500 | 540 |
| | | | in fuel i | |
| | | | 500 | 545 |

### Test for resistance to removal by a solid adsorbant (charcoal or sepiolitic clay)

The adsorbents used were:
Charcoal: Activated charcoal (decolourising) from Sigma Aldrich (product number 161551), Sepiolitic clay: a pure, fine sepiolite clay from RS Minerals.

10ml of liquid fuel marked with the test tracer compound at the concentration indicated was shaken vigorously for 1 minute with 0.5g of the adsorbent. The mixture was allowed to stand for 1 minute and then shaken for a further minute before being filtered to remove the adsorbent. A sample of the fuel was analysed by fluorescence spectrometry and the percentage of the tracer remaining in the treated fuel is shown in Tables 1 & 2.

### Test for resistance to removal by liquid chemical treatment

10ml of liquid fuel marked with the test tracer compound at the concentration indicated was shaken vigorously for 1 minute with a volume of a chemical agent as shown in Tables 1& 2. The mixture was allowed to stand for 1 minute and then shaken for a further minute before being left to separate in two layers. A sample of the fuel was analysed by fluorescence spectrometry and the percentage of the tracer remaining in the treated fuel is shown in Tables 1& 2.

### Example 1: Preparation of 3,6-diphenyl-2,5-di([pentafluorophenyl]methyl)pyrrolo[3,4-c]pyrrole-1,4-dione

A suspension of C.I. Pigment Red 255 (0.14g, 0.5 mmol) in dimethyl formamide (15ml) was prepared in a nitrogen-purged vessel. Sodium *tert*-butoxide (0.12g, 1.25mmol) was added, resulting in a colour change from red to purple. The mixture was stirred at room temperature for 20 minutes before addition of pentafluorobenzyl bromide (0.52g, 2.00mmol) to the reaction mixture which was heated at 80°C. After 1 hour, thin-layer chromatography (TLC) analysis of the reaction mixture [SiO₂ plate, (2:1) cyclohexane:ethyl acetate eluent] showed no starting material remained in the mixture. The reaction was then allowed to cool to room temperature, diluted with water (20ml) and extracted with dichloromethane (DCM) (2 x 20ml). The organic extracts were dried over magnesium sulfate and concentrated at reduced pressure to afford an orange solid (0.46g). The product was purified by recrystallisation from xylene which gave an orange solid (0.2g, 62% yield). The crude product, compound (a), was then used as a tracer in fuel samples which were tested to assess the degree to which it could be removed by the laundering methods described above. The results are shown in Table 1.

### Example 2: Preparation of 3,6-diphenyl-2,5-di([3,5-bistrifluoromethylphenyl]methyl)pyrrolo[3,4-c]pyrrole-1,4-dione

A suspension of C.I. Pigment Red 255 (0.14g, 0.5 mmol) in dimethyl formamide (15ml) was prepared in a nitrogen-purged vessel. Sodium *tert*-butoxide (0.12g, 1.25mmol) was added, resulting in a colour change from red to purple. The mixture was stirred at room temperature for 20 minutes. 3,5-bis(trifluoromethyl)benzyl bromide (0.3ml, 1.63mmol) was then added to the reaction mixture which was stirred at room-temperature overnight. TLC analysis of the reaction mixture [SiO₂ plate, (2:1) cyclohexane:ethyl acetate as eluent] showed no starting material remained in the mixture. The reaction mixture was then diluted with xylene (20ml) and water (20ml). The organic layer was separated, washed with water (20ml), dried over magnesium sulfate and concentrated at reduced pressure to afford an orange solid (0.49g). The product was purified by recrystallisation from hot xylene, giving an orange solid (one spot by TLC analysis).

The crude product, compound (b), was then used as a tracer in fuel samples which were tested to assess the degree to which it could be removed by the laundering methods described above. The results are shown in Table 1.

### Example 3: Preparation of 3,6-diphenyl-2,5-di([3,5-bis(t-butyl)-phenyl]methyl)pyrrolo[3,4-c]pyrrole-1,4-dione

A suspension of C.I. Pigment Red 255 (0.14g, 0.5 mmol) in dimethyl formamide (15ml) was prepared in a nitrogen-purged vessel. Sodium *tert*-butoxide (0.12g, 1.25mmol) was added, resulting in a colour change from red to purple. The mixture was stirred at room temperature for 20 minutes. 3,5-di-*tert*-butylbenzyl bromide (0.3ml, 1.63mmol) was then added to the reaction mixture which was stirred at room temperature overnight. TLC analysis of the reaction mixture [SiO₂ plate, (2:1) cyclohexane:ethyl acetate as eluent] showed no starting material remained in the mixture. The reaction mixture was then diluted with xylene (20ml) and water (20ml) added. The organic layer was separated, washed with water (20ml), dried over magnesium sulfate and concentrated at reduced pressure to afford an orange solid, compound (c). The crude material was then dissolved in the minimum amount of hot cyclohexane and cooled to 3°C, resulting in precipitation of an orange powder. The solid was filtered and washed with cyclohexane (2 x 2ml) to afford the pure product (0.17g, 50% yield). Compound (c), was then used as a tracer in fuel samples which were tested to assess the degree to which it could be removed by the laundering methods described above. The results are shown in Table 1.

**Table 1**

| Tracer cmpd | Conc (ppm) | Fuel | Removal test | | | | | | | |
|---|---|---|---|---|---|---|---|---|---|---|
| | | | Charcoal | Sepiolitic clay | 36% HCl (1:1) | 10% NaOH (1:1) | 20% NaOH (1:1) | Conc. H₂SO₄ (1:19) | 5% H₂SO₄ (1:1) | Conc. HNO₃ (1:19) |
| a | 1 | ii | 13 | 101 | 99 | 102 | | 6 | 105 | 71 |
| a | 1 | i | 29 | 100 | 96 | 105 | | 81 | | 72 |
| b | 1 | ii | 39 | 100 | 104 | | 98 | 63 | 105 | 74 |
| b | 1 | i | 97 | 141 | 91 | | 92 | 113 | 95 | 66 |
| c | 1 | ii | 10 | 102 | 100 | | 109 | 79 | 104 | 77 |
| c | 1 | i | 39 | 102 | 104 | | 101 | 92 | 103 | 75 |

### Example 4

3,6-Di(3,5-bistrifluoromethylphenyl)-2,5-di([cyclohexyl]methyl)pyrrolo[3,4-c]pyrrole-1,4-dione was used as a tracer in fuel samples which were tested to assess the degree to which they could be removed by the laundering methods described above. The results are shown in Table 2.

**Table 2**

| Tracer cmpd | Conc (ppm) | Fuel | Removal test | | | | | |
|---|---|---|---|---|---|---|---|---|
| | | | Charcoal | Sepiolitic clay | 5% HCl (1:1) | 8% NaOH (1:1) | 2M KOH (1:1) | Conc. H₂SO₄ (1:19) |
| d | 1 | ii | 5 | 101 | 103 | 92 | | |
| d | 1 | i | 26 | 99 | 105 | | 88 | 55 |

## Claims

1. A method of marking a hydrocarbon liquid selected from a diesel fuel and a gasoline fuel comprising the step of adding to said liquid, as a tracer compound, a compound of Formula I: 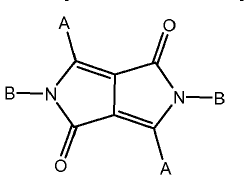 wherein,
each A is independently selected from the group consisting of (i) a phenyl group, (ii) a phenyl group substituted with one or more halogen atoms, an aliphatic group or a halogenated aliphatic group, (iii) a partially or fully halogenated alkyl group or (iv) a linear branched or cyclic C₁ - C₂₀ alkyl group,
and each B is independently selected from the group consisting of a
(i) phenyl,
(ii) an unsubstituted phenylmethyl group,
(iii) a substituted phenyl group in which the benzene ring is substituted by at least one of the substituents selected from the group consisting of a fluorine atom, a partially or fully halogenated alkyl group and a linear, branched or cyclic C₁ - C₂₀ alkyl group,
(iv) a substituted phenylmethyl group in which the benzene ring is substituted by at least one of the substituents selected from the group consisting of a fluorine atom, a partially or fully halogenated alkyl group and a linear, branched or cyclic C₁ - C₂₀ alkyl group, or
(v) 1,1-dimethylpropyl, 1,1-dimethylbutyl, 1-ethyl-1-methylpropyl, 2,2-dimethylbutyl, 1,1,2-trimethylpropyl, 1,2,2-trimethylpropyl, 1-ethyl-2,2-dimethylpropyl, 1-methylethyl-2,2-dimethylpropyl, 2-methylcyclohexyl, 3-methylcyclohexyl, 4-methylcyclohexyl, cyclohexylmethyl, 1-adamantyl, 2-adamantyl and decahydronaphthyl groups;
wherein said tracer compound is added to said hydrocarbon liquid at a concentration within the range from 1 microgram per litre to 1000 micrograms per litre.

2. A method according to claim 1, wherein each A is selected from the group consisting of (i) a phenyl group, and (ii) a substituted phenyl group substituted with at least one halogen, alkyl group or halogenated alkyl group.

3. A method according to claim 2, wherein each A is selected from phenyl, pentafluorophenyl, *bis*(trifluoromethyl)phenyl or *bis*(t-butyl)phenyl.

4. A method according to any one of the preceding claims, wherein each B is independently selected from:
- a phenyl group;
- unsubstituted phenylmethyl group;
- a phenylmethyl group in which the benzene ring is substituted by at least one C₁ - C₆ alkyl group, fluorine or halogenated alkyl group; or
- a cyclohexylmethyl group.

5. A method according to any one of the preceding claims, wherein the tracer compounds are selected from the group consisting of:
(a) 3,6-diphenyl-2,5-di([pentafluorophenyl]methyl)pyrrolo[3,4-c]pyrrole-1,4-dione
(b) 3,6-diphenyl-2,5-di([3,5-bistrifluoromethylphenyl]methyl)pyrrolo[3,4-c]pyrrole-1,4-dione
(c) 3,6-diphenyl-2,5-di([3,5-bis(t-butyl)-phenyl]methyl)pyrrolo[3,4-c]pyrrole-1,4-dione
(d) 3,6-Di(3,5-bistrifluoromethylphenyl)-2,5-di(cyclohexylmethyl)pyrrolo[3,4-c]pyrrole-1,4-dione.

6. A liquid composition comprising a mixture of a hydrocarbon liquid selected from a diesel fuel and a gasoline fuel and from 1 µg/l to 10 mg/l of a tracer compound, wherein said tracer compound comprises a compound of Formula I: 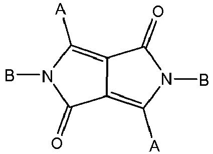 wherein,
each A is independently selected from the group consisting of (i) a phenyl group, (ii) a phenyl group substituted with one or more halogen atoms, an aliphatic group or a halogenated aliphatic group, (iii) a partially or fully halogenated alkyl group or (iv) a linear branched or cyclic C₁ - C₂₀ alkyl group,
and each B is independently selected from the group consisting of a
(i) phenyl,
(ii) an unsubstituted phenylmethyl group,
(iii) a substituted phenyl group in which the benzene ring is substituted by at least one of the substituents selected from the group consisting of a fluorine atom, a partially or fully halogenated alkyl group and a linear, branched or cyclic C1 - C20 alkyl group,
(iv) a substituted phenylmethyl group in which the benzene ring is substituted by at least one of the substituents selected from the group consisting of a fluorine atom, a partially or fully halogenated alkyl group and a linear, branched or cyclic C1 - C20 alkyl group, or
(v) 1,1-dimethylpropyl, 1,1-dimethylbutyl, 1-ethyl-1-methylpropyl, 2,2-dimethylbutyl, 1,1,2-trimethylpropyl, 1,2,2-trimethylpropyl, 1-ethyl-2,2-dimethylpropyl, 1-methylethyl-2,2-dimethylpropyl, 2-methylcyclohexyl, 3-methylcyclohexyl, 4-methylcyclohexyl, cyclohexylmethyl, 1-adamantyl, 2-adamantyl and decahydronaphthyl groups.

7. A liquid composition according to claim 6, wherein each A is selected from a phenyl group, a substituted phenyl group substituted with at least one halogen, alkyl group or halogenated alkyl group.

8. A liquid composition according to claim 7, wherein each A is selected from pentafluorophenyl, *bis*(trifluoromethyl)phenyl or *bis*(t-butyl)phenyl.

9. A liquid composition according to any one of claims 6 - 8, wherein each B is independently selected from:
- a phenyl group;
- unsubstituted phenylmethyl group;
- a phenylmethyl group in which the benzene ring is substituted by at least one C₁ - C₆ alkyl group, fluorine or halogenated alkyl group; or
- a cyclohexylmethyl group.

10. A liquid composition according to any one of claims 6 - 9, wherein the tracer compound is selected from the group consisting of:
(a) 3,6-diphenyl-2,5-di([pentafluorophenyl]methyl)pyrrolo[3,4-c]pyrrole-1,4-dione
(b) 3,6-diphenyl-2,5-di([3,5-bistrifluoromethylphenyl]methyl)pyrrolo[3,4-c]pyrrole-1,4-dione
(c) 3,6-diphenyl-2,5-di([3,5-bis(t-butyl)-phenyl]methyl)pyrrolo[3,4-c]pyrrole-1,4-dione
(d) 3,6-di(3,5-bistrifluoromethylphenyl)-2,5-di(cyclohexylmethyl)pyrrolo[3,4-c]pyrrole-1,4-dione.

11. A liquid composition according to any one of claims 6 - 10, wherein the hydrocarbon liquid contains more than one tracer compound.

## Patentansprüche

1. Verfahren zum Markieren einer Kohlenwasserstoffflüssigkeit, ausgewählt aus einem Dieselkraftstoff und einem Benzinkraftstoff, umfassend den Schritt der Zugabe der Flüssigkeit als Tracer-Verbindung, einer Verbindung der Formel I: 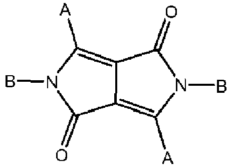 wobei
jedes A unabhängig ausgewählt ist aus der Gruppe bestehend aus (i) einer Phenylgruppe, (ii) einer Phenylgruppe, substituiert mit einem oder mehreren Halogenatomen, einer aliphatischen Gruppe oder einer halogenierten aliphatischen Gruppe, (iii) einer teilweise oder vollständig halogenierten Alkylgruppe oder (iv) einer linearen verzweigten oder zyklischen C₁-C₂₀-Alkylgruppe,
und jedes B unabhängig ausgewählt ist aus der Gruppe bestehend aus
(i) einem Phenyl,
(ii) einer unsubstituierten Phenylmethyl-Gruppe,
(iii) einer substituierten Phenylgruppe, in der der Benzolring substituiert ist mit mindestens einem der Substituenten, ausgewählt aus der Gruppe bestehend aus einem Fluoratom, einer teilweise oder vollständig halogenierten Alkylgruppe und einer linearen, verzweigten oder zyklischen C₁-C₂₀-Alkylgruppe,
(iv) einer substituierten Phenylmethyl-Gruppe, in der der Benzolring substituiert ist mit mindestens einem der Substituenten, ausgewählt aus der Gruppe bestehend aus einem Fluoratom, einer teilweise oder vollständig halogenierten Alkylgruppe und einer linearen, verzweigten oder zyklischen C₁-C₂₀-Alkylgruppe, oder
(v) 1,1-Dimethylpropyl, 1,1-Dimethylbutyl, 1-Ethyl-1-methylpropyl, 2,2-Dimethylbutyl, 1,1,2-Trimethylpropyl, 1,2,2-Trimethylpropyl, 1-Ethyl-2,2-dimethylpropyl, 1-Methylethyl-2,2-dimethylpropyl, 2-Methylcyclohexyl, 3-Methylcyclohexyl, 4-Methylcyclohexyl, Cyclohexylmethyl, 1-Adamantyl, 2-Adamantyl und Decahydronaphthyl-Gruppen;
wobei die Tracer-Verbindung hinzugefügt wird zu der Kohlenwasserstoffflüssigkeit in einer Konzentration im Bereich von 1 Mikrogramm pro Liter bis 1000 Mikrogramm pro Liter.

2. Verfahren nach Anspruch 1, wobei jedes A ausgewählt ist aus der Gruppe bestehend aus (i) einer Phenylgruppe und (ii) einer substituierten Phenylgruppe, substituiert mit mindestens einem Halogen, einer Alkylgruppe oder halogenierten Alkylgruppe.

3. Verfahren nach Anspruch 2, wobei jedes A ausgewählt ist aus Phenyl, Pentafluorphenyl, *Bis*(trifluormethyl)phenyl oder *Bis*(t-butyl)phenyl.

4. Verfahren nach einem der vorstehenden Ansprüche, wobei jedes B unabhängig ausgewählt ist aus:
- einer Phenylgruppe;
- einer unsubstituierten Phenylmethyl-Gruppe;
- einer Phenylmethyl-Gruppe, in der der Benzolring substituiert ist mit mindestens einer C₁-C₆-Alkylgruppe, Fluor- oder halogenierten Alkylgruppe; oder
- einer Cyclohexylmethyl-Gruppe.

5. Verfahren nach einem der vorstehenden Ansprüche, wobei die Tracer-Verbindungen ausgewählt sind aus der Gruppe bestehend aus:
(a) 3,6-Diphenyl-2,5-di([pentafluorphenyl]methyl)pyrrolo[3,4-c]pyrrol-1,4-dion
(b) 3,6-Diphenyl-2,5-di([3,5-bistrifluormethylphenyl]methyl)pyrrolo[3,4-c]pyrrol-1,4-dion
(c) 3,6-Diphenyl-2,5-di([3,5-bis(t-butyl)-phenyl]methyl)pyrrolo[3,4-c]pyrrol-1,4-dion
(d) 3,6-Di(3,5-bistrifluormethylphenyl)-2,5-di(cyclohexylmethyl)pyrrolo[3,4-c]pyrrol-1,4-dion.

6. Flüssige Zusammensetzung, umfassend ein Gemisch aus einer Kohlenwasserstoffflüssigkeit, ausgewählt aus einem Dieselkraftstoff und einem Benzinkraftstoff und von 1 µg/l bis 10 mg/l einer Tracer-Verbindung, wobei die Tracer-Verbindung eine Verbindung der Formel I umfasst: 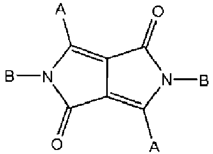 wobei
jedes A unabhängig ausgewählt ist aus der Gruppe bestehend aus (i) einer Phenylgruppe, (ii) einer Phenylgruppe, substituiert mit einem oder mehreren Halogenatomen, einer aliphatischen Gruppe oder einer halogenierten aliphatischen Gruppe, (iii) einer teilweise oder vollständig halogenierten Alkylgruppe oder (iv) einer linearen verzweigten oder zyklischen C₁-C₂₀-Alkylgruppe,
und jedes B unabhängig ausgewählt ist aus der Gruppe bestehend aus
(i) einem Phenyl,
(ii) einer unsubstituierten Phenylmethyl-Gruppe,
(iii) einer substituierten Phenylgruppe, in der der Benzolring substituiert ist mit mindestens einem der Substituenten, ausgewählt aus der Gruppe bestehend aus einem Fluoratom, einer teilweise oder vollständig halogenierten Alkylgruppe und einer linearen, verzweigten oder zyklischen C₁-C₂₀-Alkylgruppe,
(iv) einer substituierten Phenylmethyl-Gruppe, in der der Benzolring substituiert ist mit mindestens einem der Substituenten, ausgewählt aus der Gruppe bestehend aus einem Fluoratom, einer teilweise oder vollständig halogenierten Alkylgruppe und einer linearen, verzweigten oder zyklischen C₁-C₂₀-Alkylgruppe, oder
(v) 1-Dimethylpropyl, 1-Dimethylbutyl, 1-Ethyl-1-methylpropyl, 2-Dimethylbutyl, 1,1,2-Trimethylpropyl, 1,2,2-Trimethylpropyl, 1-Ethyl-2,2-dimethylpropyl, 1-Methylethyl-2,2-dimethylpropyl, 2-Methylcyclohexyl, 3-Methylcyclohexyl, 4-Methylcyclohexyl, Cyclohexylmethyl, 1-Adamantyl, 2-Adamantyl und Decahydronaphthyl-Gruppen.

7. Flüssige Zusammensetzung nach Anspruch 6, wobei jedes A ausgewählt ist aus einer Phenylgruppe, einer substituierten Phenylgruppe, substituiert mit mindestens einem Halogen, einer Alkylgruppe oder halogenierten Alkylgruppe.

8. Flüssige Zusammensetzung nach Anspruch 7, wobei jedes A ausgewählt ist aus Pentafluorphenyl, *Bis*(trifluormethyl)phenyl oder *Bis(t-*butyl)phenyl.

9. Flüssige Zusammensetzung nach einem der Ansprüche 6 - 8, wobei jedes B unabhängig ausgewählt ist aus:
- einer Phenylgruppe;
- einer unsubstituierten Phenylmethyl-Gruppe;
- einer Phenylmethyl-Gruppe, in der der Benzolring substituiert ist mit mindestens einer C₁-C₆-Alkylgruppe, Fluor- oder halogenierten Alkylgruppe; oder
- einer Cyclohexylmethyl-Gruppe.

10. Flüssige Zusammensetzung nach einem der Ansprüche 6 - 9, wobei die Tracer-Verbindung ausgewählt ist aus der Gruppe bestehend aus:
(a) 3,6-Diphenyl-2,5-di([pentafluorphenyl]methyl)pyrrolo[3,4-c]pyrrol-1,4-dion
(b) 3,6-Diphenyl-2,5-di([3,5-bistrifluormethylphenyl]methyl)pyrrolo[3,4-c]pyrrol-1,4-dion
(c) 3,6-Diphenyl-2,5-di([3,5-bis(t-butyl)-phenyl]methyl)pyrrolo[3,4-c]pyrrol-1,4-dion
(d) 3,6-Di(3,5-bistrifluormethylphenyl)-2,5-di(cyclohexylmethyl)pyrrolo[3,4-c]pyrrol-1,4-dion.

11. Flüssige Zusammensetzung nach einem der Ansprüche 6 - 10, wobei die Kohlenwasserstoffflüssigkeit mehr als eine Tracer-Verbindung umfasst.

## Revendications

1. Procédé de marquage d'un liquide hydrocarboné choisi parmi un carburant de type diesel et un carburant de type essence, comprenant l'étape d'addition, audit liquide, en tant que composé traceur, d'un composé de formule I : 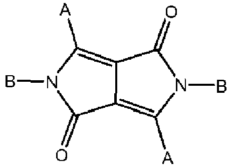 dans laquelle
- chaque A est choisi, indépendamment, dans le groupe constitué par (i) un groupe phényle, (ii) un groupe phényle substitué par un ou plusieurs atomes d'halogène, un groupe aliphatique ou un groupe aliphatique halogéné, (iii) un groupe alkyle partiellement ou totalement halogéné ou (iv) un groupe C₁-C₂₀-alkyle linéaire, ramifié ou cyclique et
- chaque B est choisi, indépendamment, dans le groupe constitué par
(i) phényle
(ii) un groupe phénylméthyle non substitué,
(iii) un groupe phényle substitué dans lequel le cycle benzène est substitué par au moins l'un des substituants choisis dans le groupe constitué par un atome de fluor, un groupe alkyle partiellement ou totalement halogéné et un groupe C₁-C₂₀-alkyle linéaire, ramifié ou cyclique,
(iv) un groupe phénylméthyle substitué dans lequel le cycle benzène est substitué par au moins l'un des substituants choisis dans le groupe constitué par un atome de fluor, un groupe alkyle partiellement ou totalement halogéné et un groupe C₁-C₂₀-alkyle linéaire, ramifié ou cyclique,
(v) les groupes 1,1-diméthylpropyle, 1,1-diméthylbutyle, 1-éthyl-1-méthylpropyle, 2,2-diméthylbutyle, 1,1,2-triméthylpropyle, 1,2,2-triméthylpropyle, 1-éthyl-2,2-diméthylpropyle, 1-méthyléthyl-2,2-diméthylpropyle, 2-méthylcyclohexyle, 3-méthylcyclohexyle, 4-méthylcyclohexyle, cyclohexylméthyle, 1-adamantyle, 2-adamantyle et décahydronaphtyle ;
ledit composé traceur étant ajouté audit liquide hydrocarboné en une concentration dans la plage de 1 µg par litre à 1000 µg par litre.

2. Procédé selon la revendication 1, chaque A étant choisi dans le groupe constitué par (i) un groupe phényle et (ii) un groupe phényle substitué, substitué par au moins un halogène, un groupe alkyle ou un groupe alkyle halogéné.

3. Procédé selon la revendication 2, chaque A étant choisi parmi phényle, pentafluorophényle, bis(trifluorométhyl)phényle ou bis(t-butyl)phényle.

4. Procédé selon l'une quelconque des revendications précédentes, chaque B étant choisi indépendamment parmi :
- un groupe phényle ;
- un groupe phénylméthyle non substitué ;
- un groupe phénylméthyle dans lequel le cycle benzène est substitué par au moins un groupe C₁-C₆-alkyle, du fluor ou un groupe alkyle halogéné ; ou,
- un groupe cyclohexylméthyle.

5. Procédé selon l'une quelconque des revendications précédentes, les composés traceurs étant choisis dans le groupe constitué par :
(a) la 3,6-diphényl-2,5-di([pentafluorophényl]méthyl)pyrrolo[3,4-c]pyrrole-1,4-dione
(b) la 3,6-diphényl-2,5-di([3,5-bistrifluorométhylphényl]méthyl)pyrrolo[3,4-c]pyrrole-1,4-dione
(c) la 3,6-diphényl-2,5-di([3,5-bis(t-butyl)-phényl]méthyl)pyrrolo[3,4-c]pyrrole-1,4-dione
(d) la 3,6-di(3,5-bistrifluorométhylphényl)-2,5-di(cyclohexylméthyl)pyrrolo[3,4-c]pyrrole-1,4-dione.

6. Composition liquide comprenant un mélange d'un liquide hydrocarboné choisi parmi un carburant de type diesel et un carburant de type essence et 1 µg/l à 10 mg/l d'un composé traceur, ledit composé traceur comprenant un composé de formule I : 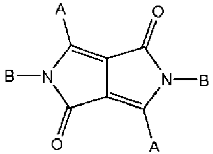 dans laquelle
- chaque A est choisi, indépendamment, dans le groupe constitué par (i) un groupe phényle, (ii) un groupe phényle substitué par un ou plusieurs atomes d'halogène, un groupe aliphatique ou un groupe aliphatique halogéné, (iii) un groupe alkyle partiellement ou totalement halogéné ou (iv) un groupe C₁-C₂₀-alkyle linéaire, ramifié ou cyclique et
- chaque B est choisi, indépendamment, dans le groupe constitué par
(i) phényle
(ii) un groupe phénylméthyle non substitué,
(iii) un groupe phényle substitué dans lequel le cycle benzène est substitué par au moins l'un des substituants choisis dans le groupe constitué par un atome de fluor, un groupe alkyle partiellement ou totalement halogéné et un groupe C₁-C₂₀-alkyle linéaire, ramifié ou cyclique,
(iv) un groupe phénylméthyle substitué dans lequel le cycle benzène est substitué par au moins l'un des substituants choisis dans le groupe constitué par un atome de fluor, un groupe alkyle partiellement ou totalement halogéné et un groupe C₁-C₂₀-alkyle linéaire, ramifié ou cyclique,
(v) les groupes 1,1-diméthylpropyle, 1,1-diméthylbutyle, 1-éthyl-1-méthylpropyle, 2,2-diméthylbutyle, 1,1,2-triméthylpropyle, 1,2,2-triméthylpropyle, 1-éthyl-2,2-diméthylpropyle, 1-méthyléthyl-2,2-diméthylpropyle, 2-méthylcyclohexyle, 3-méthylcyclohexyle, 4-méthylcyclohexyle, cyclohexylméthyle, 1-adamantyle, 2-adamantyle et décahydronaphtyle.

7. Composition liquide selon la revendication 6, chaque A étant choisi parmi un groupe phényle, un groupe phényle substitué, substitué par au moins un halogène, un groupe alkyle ou un groupe alkyle halogéné.

8. Composition liquide selon la revendication 7, chaque A étant choisi parmi pentafluorophényle, bis(trifluorométhyl)phényle ou bis(t-butyl)phényle.

9. Composition liquide selon l'une quelconque des revendications 6-8, chaque B étant choisi indépendamment parmi :
- un groupe phényle ;
- un groupe phénylméthyle non substitué ;
- un groupe phénylméthyle dans lequel le cycle benzène est substitué par au moins un groupe C₁-C₆-alkyle, du fluor ou un groupe alkyle halogéné ; ou,
- un groupe cyclohexylméthyle.

10. Composition liquide selon l'une quelconque des revendications 6-9, le composé traceur étant choisi dans le groupe constitué par :
(a) la 3,6-diphényl-2,5-di([pentafluorophényl]méthyl)pyrrolo[3,4-c]pyrrole-1,4-dione
(b) la 3,6-diphényl-2,5-di([3,5-bistrifluorométhylphényl]méthyl)pyrrolo[3,4-c]pyrrole-1,4-dione
(c) la 3,6-diphényl-2,5-di([3,5-bis(t-butyl)-phényl]méthyl)pyrrolo[3,4-c]pyrrole-1,4-dione
(d) la 3,6-di(3,5-bistrifluorométhylphényl)-2,5-di(cyclohexylméthyl)pyrrolo[3,4-c]pyrrole-1,4-dione.

11. Composition liquide selon l'une quelconque des revendications 6-10, le liquide hydrocarboné contenant plus d'un composé traceur.
